# EUROPÄISCHE PATENTSCHRIFT

(11) **EP 1 397 280 B1**
(45) Veröffentlichungstag und Bekanntmachung des Hinweises auf die Patenterteilung: **18.04.2007**
(21) Anmeldenummer: 02743113.9
(22) Anmeldetag: 27.05.2002
(51) Int. Cl.: B60T 8/44, B60T 13/565

(54) **UNTERDRUCKBREMSKRAFTVERSTÄRKER EINER FAHRZEUGBREMSANLAGE**
VACUUM BRAKE BOOSTER OF A VEHICLE BRAKING SYSTEM
SERVOFREIN A DEPRESSION D'UN SYSTEME DE FREINAGE DE VEHICULE

(30) Priorität: 02.06.2001 DE 10127096; 27.04.2002 DE 10218972
(43) Veröffentlichungstag der Anmeldung: 17.03.2004
(73) Patentinhaber: Continental Teves AG & Co. oHG, 60488 Frankfurt am Main (DE)
(72) Erfinder: WAGNER, Wilfried, 35625 Hüttenberg (DE); FEIGEL, Hans-Jörg, 61191 Rosbach (DE); KNEWITZ, Ingo, 61267 Neu Anspach (DE)
(86) Internationale Anmeldenummer: PCT/EP2002/005797
(87) Internationale Veröffentlichungsnummer: WO 2002/098718

(56) Entgegenhaltungen:
- EP-A- 0 800 975
- EP-A- 0 827 887
- EP-A- 0 850 815
- WO-A-99/02385
- WO-A-99/38741
- DE-A- 19 756 080
- US-A- 5 938 297
- US-A- 6 062 656

## Beschreibung

Die Erfindung betrifft einen Unterdruckbremskraftverstärker einer Fahrzeugbremsanlage, mit einem Unterdruckgehäuse, das durch mindestens eine bewegliche Trennwand in mindestens eine Unterdruckkammer und mindestens eine Arbeitskammer aufgeteilt ist und mit einer Sensoreinheit zur Sensierung von Drücken in dem Unterdruckbremskraftverstärker, wobei die Sensoreinheit dafür vorgesehen ist, den Druck in der Unterdruckkammer und den Druck in der Arbeitskammer oder den Druckunterschied zwischen der Arbeitskammer und der Unterdruckkammer zu sensieren, und wobei dem Unterdruckbremskraftverstärker eine elektronische Steuereinheit zugeordnet ist, die eine Auswerteeinheit aufweist, zwecks Auswertung der sensierten Drücke in der Unterdruckkammer und der Arbeitskammer oder des Druckunterschieds zwischen der Arbeitskammer und der Unterdruckkammer, und wobei die elektronische Steuereinheit eine Ansteuerungseinheit aufweist, zwecks Ansteuerung einer aktiven hydraulischen Bremskraftunterstützungseinheit auf Grundlage der Auswertung durch die Auswerteeinheit, und wobei die Sensoreinheit über ein erstes Sensorelement den Druck der Unterdruckkammer und über ein zweites Sensorelement den Druck der Arbeitskammer sensiert, und wobei die beiden Sensorelemente in einem gemeinsamen Gehäuse angeordnet sind, das zumindest teilweise durch eine einzige Öffnung im Unterdruckgehäuse in die Unterdruckkammer ragt.

Unterdruckbremskraftverstärker benötigen eine vom Motor zur Verfügung gestellte Unterdruckversorgung zur Unterstützung der von dem Fahrer aufzubringenden Pedalkraft. Abhängig vom Motor wird bei bestimmten Pedalkräften ein Zustand erreicht, bei dem eine weitere Erhöhung der Kraft auf die Betätigungseinheit nur durch eine Steigerung der Pedalkraft möglich ist, da der Unterdruckbremskraftverstärker die maximal mögliche Unterstützungskraft erreicht hat. Den Zustand bezeichnet man als Aussteuerpunkt des Verstärkers.

Ist die maximal erreichbare Unterstützungskraft durch eine nur schwache Unterdruckversorgung zu gering, was im Zuge neuer Motorentechnik, wie z.B. Benzin-Direkteinspritzer oder Dieselmotoren immer stärker der Fall ist, dann wird eine zusätzliche Bremskraftunterstützung erforderlich. Eine Möglichkeit zur Erzeugung einer zusätzlichen Bremskraft bzw. eines Zusatz-Bremsdrucks ist der Einsatz einer "aktiven" hydraulischen Bremskraftunterstützung. Dies wird z.B. mittels einer hydraulischen Pumpe erreicht. Der hydraulische Druck, der im hydraulischen Hauptbremszylinder aus der vom Fahrer über das Bremspedal eingesteuerten, mittels Unterdruckbremskraftverstärker verstärkten Bremskraft resultiert, wird dabei von der hydraulischen Pumpe zusätzlich erhöht. Diese Pumpe wird von einem Elektromotor angetrieben, der von einer elektronischen Bremsenregelungseinheit angesteuert wird.

Ferner ist es an sich bekannt, für bestimmte Anwendungsfälle Drucksensoren in/an Unterdruckbremskraftverstärkern einzusetzen, um eine Druckdifferenz zwischen der Unterdruckkammer und der Arbeitskammer zu erfassen und auszuwerten.

In der WO 99/02385 ist ein Unterdruckbremskraftverstärker mit einer Sensoranordnung offenbart, die einen Differenzdrucksensor mit zwei Luftführungskanälen aufweist, die sich in die Unterdruckkammer und die Arbeitskammer des Unterdruckbremskraftverstärkers erstrecken. Der Differenzdrucksensor, der auch als zwei Drucksensoren ausgebildet sein kann, ist in einem gemeinsamen Gehäuse angeordnet, das außerhalb des Unterdruckbremskraftverstärkers angebracht ist. Deshalb müssen zwei Luftführungskanäle vorgesehen werden, was relativ aufwendig ist. Au-ßerdem ist die Sensoranordnung mittels der Luftführungskanäle am Bremskraftverstärker befestigt, was konstruktiv ebenfalls relativ aufwendig ist.

Aufgabe der Erfindung ist es, einen Unterdruckbremskraftverstärker der eingangs genannten Gattung derart zu verbessern, dass die Sensoreinheit mit einfachen Mitteln am Unterdruckgehäuse angebracht werden kann und dass die Anzahl der Luftführungskanäle verringert wird.

Die Aufgabe wird erfindungsgemäß dadurch gelöst, dass zwei separate Messbohrungen im Gehäuse der Sensoreinheit ausgebildet sind, wobei die erste Messbohrung das erste Sensorelement direkt mit der Unterdruckkammer verbindet, während die zweite Messbohrung in eine rohr- oder schlauchförmige Verbindungsleitung, welche die bewegliche Trennwand durchdringt, mündet und das zweite Sensorelement mit der Arbeitskammer verbindet.

Eine besonders vorteilhafte Weiterbildungen des Erfindungsgegenstandes sieht vor, dass eine elastische Dichtung vorgesehen ist, die derart angeordnet ist, dass eine Wandung des Unterdruckgehäuses zwischen einer Kante des Gehäuses) und der Dichtung eingespannt ist. Dabei ist ein Schraubring vorgesehen, der die Dichtung gegen die Wandung des Unterdruckgehäuses und gegen die Kante presst.

Weitere vorteilhafte Weiterbildungen der Erfindung sind den Unteransprüchen 4 und 5 zu entnehmen.

Die Sensoreinheit ist dafür vorgesehen, die Druckdifferenz zwischen dem in der Unterdruckkammer und der Arbeitskammer herrschenden Druck zu sensieren und ein für die sensierte Druckdifferenz charakteristisches Signal für eine elektronische Steuereinheit zu erzeugen. Bei dieser Ausführungsform wird demnach durch die Sensoreinheit "direkt" die Druckdifferenz zwischen der Unterdruckkammer und der Arbeitskammer sensiert. Das für die Druckdifferenz charakteristische Signal wird einer Auswerteeinheit zugeführt und darin ausgewertet. Nach Maßgabe der Auswertung ist dann mittels der Ansteuereinheit ein Ansteuersignal für eine aktive hydraulische Bremskraftunterstützungseinheit erzeugbar.

Die Sensoreinheit ist dafür vorgesehen, die in der Unterdruckkammer und der Arbeitskammer herrschenden Drücke bezüglich eines "normierten" Drucks, vorzugsweise bezüglich des Außendrucks (Umgebungsdrucks), zu sensieren und für die sensierten Drücke in der Unterdruckkammer und der Arbeitskammer charakteristische Signale für die elektronische Steuereinheit zu erzeugen. Der Begriff "Außendruck" bedeutet hier der Druck der umgebenden Atmosphäre (Umgebungsdruck). Hier werden somit zwei Drucksignale, jeweils ein Signal für den Druck in der Unterdruckkammer und eins für den Arbeitskammer-Druck, durch die Sensoreinheit sensiert. Die dafür charakteristischen Signale werden der Auswerteeinheit zugeführt und darin ausgewertet. Nach Maßgabe der Auswertung mittels der Ansteuereinheit ist dann ein Ansteuersignal für eine aktive hydraulische Bremskraftunterstützungseinheit, insbesondere mittels einer Einheit zur Erzeugung eines Ansteuersignals für eine Elektromotor-Pumpen-Einheit, erzeugbar. Damit ist es möglich, die hydraulische Bremskraftunterstützungseinheit im Sinne eines Aufbaus oder einer Regelung eines zusätzlichen Bremsdrucks anzusteuern. Diese Ausführungsform der Sensoreinheit mit einer getrennten Sensierung der Drücke in der Unterdruckkammer und der Arbeitskammer ist bevorzugt. Denn es ist vorgesehen, dass ein Vergleich des sensierten Drucks in der Unterdruckkammer mit dem sensierten Druck in der Arbeitskammer mittels der elektronischen Auswerteeinheit in der elektronischen Steuereinheit erfolgt. Da keine elektronischen Auswertekomponenten und/oder Steuerungskomponenten in oder am Gehäuse der Sensoreinheit notwendig sind, kann dieses sehr klein, kompakt und leicht ausgeführt werden.

Die Sensoreinheit weist ein erstes Sensorelement zur Sensierung des Drucks bzw. Vakuums in der Unterdruckkammer und ein zweites Sensorelement zur Sensierung des Drucks in der Unterdruckkammer auf und dass beide Sensorelemente in einem gemeinsamen Gehäuse angeordnet sind. Diese bevorzugte Ausführungsform bietet den Vorteil, dass mit einem einzigen Bauteil, welches die Funktionen zweier Druck- bzw. Vakuumsensoren vereint ("Doppeldrucksensoreinheit oder Doppelvakuumsensoreinheit"), die Druckverhältnisse beider Kammern des Unterdruckbremskraftverstärkers einzeln erfasst werden können. Das bedeutet, es sind ein erstes Sensorelement zur Sensierung des Differenzdrucks zwischen der Unterdruckkammer und dem Außendruck und ein zweites Sensorelement zur Sensierung des Differenzdrucks zwischen der Unterdruckkammer und dem Außendruck in einem gemeinsamen Gehäuse vorgesehen. Beide Sensorelemente sind vorzugsweise benachbart in dem Gehäuse angeordnet.

Das Gehäuse der Sensoreinheit ist zumindest teilweise innerhalb des Unterdruckgehäuses, d.h. zumindest teilweise innerhalb der Unterdruckkammer, angeordnet. Das Gehäuse ist dann vorzugsweise so ausgestaltet und/oder angeordnet, das das erste und zweite Sensorelement im Innenraum des Unterdruckbremskraftverstärkers, d.h. innerhalb der Vakuumkammer, angeordnet sind. Das bedeutet, die Sensorelemente sind innerhalb der Wandungen des Unterdruckgehäuses angeordnet, welche die Vakuumkammer bzw. Unterdruckkammer begrenzen.

Das Gehäuse der Sensoreinheit weist vorzugsweise eine rohr- oder schlauchförmige Verbindungsleitung auf, welche die bewegliche Trennwand durchdringt. Es ist dabei mindestens eine Länge der Verbindungsleitung vorgesehen, die ausreicht, damit die Verbindungsleitung in allen möglichen Stellungen der Trennwand diese auch durchdringt. Damit wird eine Verbindung zwischen dem Sensorelement zur Sensierung des Arbeitskammerdrucks mit der Arbeitskammer in allen Aussteuerstellungen des Unterdruckbremskraftverstärkers sichergestellt.

Erfindungsgemäß wird bei Bremssystemen mit einem Hauptbremszylinder, insbesondere Tandem-Hauptbremszylinder, die Sensoreinheit an der dem Hauptbremszylinder zugewandten Wandung des Unterdruckgehäuses angeordnet. Vorteilhaft ist die Sensoreinheit dann in das dem Hauptbremszylinder zugewandte Gehäuse bzw. Gehäusebauteil integrierbar.

Es ist vorgesehen, dass die Sensoreinheit eine vierpolige Steckverbindung zur elektrischen Verbindung der Sensoreinheit mit der Steuereinheit aufweist, zwecks Signalübertragung der Signale von zwei Sensorelementen.

Die Erfindung wird anhand von Abbildungen (Fig. 1 bis Fig. 7) beispielhaft näher erläutert. Es zeigen:
- Fig.1: eine Schnittdarstellung eines Unterdruckbremskraftverstärkers in einer ersten Stellung,
- Fig.2: einen Teilschnitt durch den Unterdruckbremskraftverstärker gemäß Fig.1 in vergrößerter Darstellung,
- Fig.3: eine Schnittdarstellung eines Unterdruckbremskraftverstärkers gemäß Fig.1 in einer zweiten Stellung,
- Fig.4: einen Teilschnitt durch den Unterdruckbremskraftverstärker gemäß Fig.3 in vergrößerter Darstellung,
- Fig.5: eine Schnittdarstellung eines Unterdruckbremskraftverstärkers gemäß Fig.1 in einer dritten Stellung,
- Fig.6: einen Teilschnitt durch den Unterdruckbremskraftverstärkers gemäß Fig.5 in vergrößerter Darstellung,
- Fig.7: eine Schnittdarstellung einer Sensoreinheit mit zwei Sensorelementen.

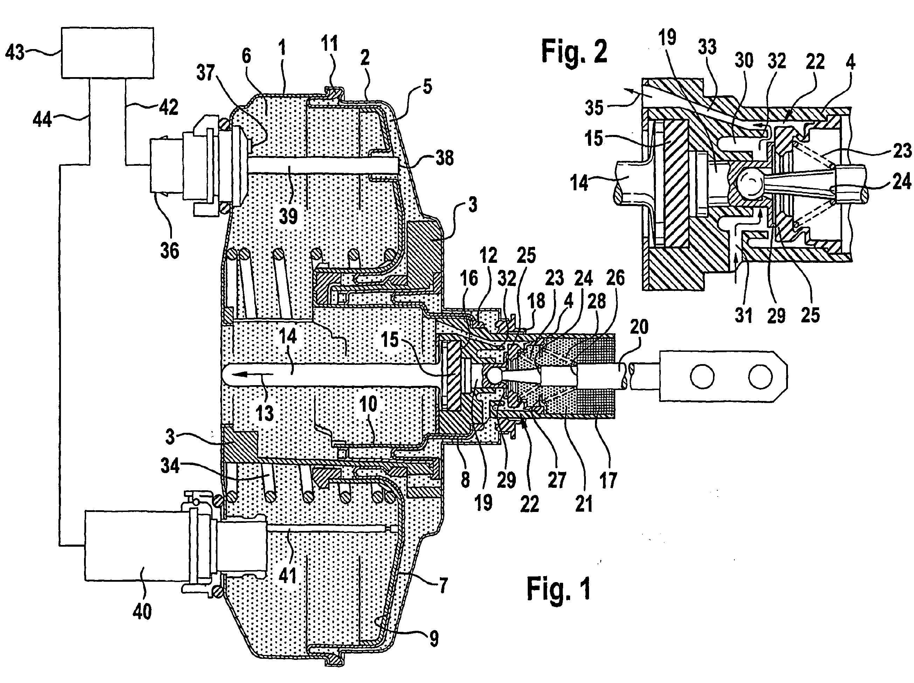

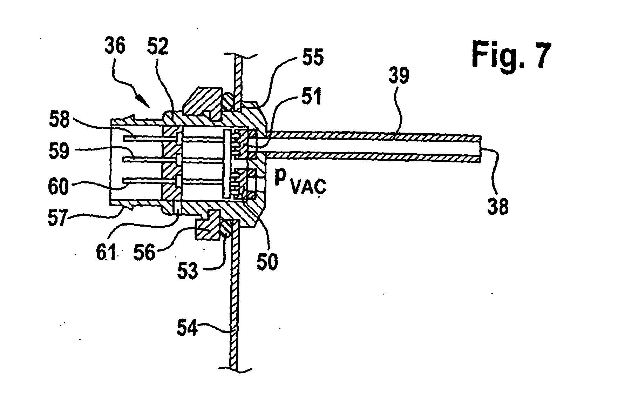

In den Fig.1 bis 6 ist derselbe Bremskraftverstärker in verschiendenen Stellungen dargestellt und in Fig. 7 ist eine Sensoreinheit mit zwei Sensorelementen dargestellt. Die gezeigten Bauteile sind für die korrespondierenden Abbildungen im wesentlichen dieselben und erfüllen dieselben Funktionen, so dass auf wiederholte Beschreibung der Funktionen und Darstellung der Bezugszeichen verzichtet werden konnte.

Der in Fig. 1 und Fig.2 dargestellte Unterdruckbremskraftverstärker weist ein Unterdruckgehäuse auf, das beispielsweise aus einem Topf 1 und einem Deckel 2 zusammengesetzt ist. Die beiden Gehäusehälften 1,2 haben hier eine Doppelfunktion: Sie übertragen die Betätigungskräfte vom Pedal zum an den Bremskraftverstärker anschließenden Hauptbremszylinder (nicht dargestellt) und sie dienen als Unterdruckbehälter. Die Kraftübertragung erfolgt hier durch eine Zugankerkonstruktion. Durch ein mittig angeordnetes Zentralrohr 3 werden die beiden Flanschseiten des Gerätes starr miteinander verbunden. Das Gehäuse ist so von den Übertragungskräften entlastet und muss nur noch die Druckdifferenz zwischen Atmosphäre (Außenluft) und Unterdruck aufnehmen. Das Unterdruckgehäuse ist in eine Arbeitskammer 5 und eine Vakuumkammer 6 aufgeteilt. Dies erfolgt durch mit einer Steuernabe 4 axial bewegliche Gummimembran 7,8 und Trennwand 9,10. Durch die Anordnung des Zentralrohrs 4 ist diese zweiteilige Gummimembran 7,8 und zweiteilige Trennwand 9,10 erforderlich. Der Außenrand 11 der äußeren Membran 7 ist zwischen Topf und Deckel im Unterdruckgehäuse und der Innenrand 12 der inneren Membran 8 ist in der Steuernabe 4 dichtend festgeklemmt. Die Membran 7,8 liegt auf der der Arbeitskammer 5 zugewandten Seite der Trennwand 9,10 an diese an und dichtet somit die Vakuumkammer 6 von der Arbeitskammer 5 ab. Die Trennwand 10 wird formschlüssig an der der Kraftabgaberichtung 13 zugewandten Stirnseite der Steuernabe 4 gehalten. Dabei drückt die Trennwand 10 den Innenrand der Gummimembran 8 gegen die Steuernabe 4 fest an. Die Kraftabgabe erfolgt über ein Kraftabgabeglied 14, das sich über eine Reaktionsscheibe 15 an einer Stufe 16 abstützt. Auf der anderen Seite durchragt die Steuernabe 4 den Deckel 2 und ist zur Atmosphäre axial geöffnet über ein Filter 17. Mittels einer im Deckel formschlüssig eingesetzten Dichtung 18 wird die Arbeitskammer 5 zur Umgebung abgedichtet.

Die Kraftübertragung auf die Reaktionsscheibe 15 erfolgt über einen Ventilkolben 19, der auf den Kugelkopf einer abgestuften Kolbenstange 20 beweglich, aber ohne axiales Spiel aufgeklemmt ist. Die Kolbenstange 20 durchragt einen Luftraum 21 und steht mit einem nicht dargestellten Betätigungspedal in Verbindung. Im Luftrum 21 ist ein von der Kolbenstange mit Spiel durchragtes Tellerventil 22 eingesetzt.

Innerhalb des Tellerventils 22 ist eine Feder 23 eingesetzt, die sich an einer ersten Stufe 24 der Kolbenstange 20 abstützt und gegen den Ventilteller 25 gedrückt wird. Die Kolbenstange 20 wird durch eine andere, zwischen einer weiteren Stufe 26 der Kolbenstange 20 und einer Scheibe 27 wirkenden Feder 28 gegen die Kraftabgaberichtung 13 kraftbeaufschlagt, so dass der mit ihr mechanisch verbundene Ventilkolben 19 mit seiner ringförmigen Dichtkante 29 auf dem Ventilteller 25 dichtend zur Anlage kommt und so den Luftraum 21 zum Verstärkerinneren abtrennt. Um den Ventilkolben ist dabei ein Raum 36 abgetrennt, der über eine Öffnung 31 mit der Arbeitskammer 5 in Verbindung steht. Radial außen über einer Stufe 32 liegend, ist der Raum 30 über einen Kanal 33 in der Steuernabe 4 mit der Unterdruckkammer 6 verbunden.

Die in Fig.1 und Fig.2 dargestellte Ruhestellung des Unterdruckbremskraftverstärkers wird durch die Feder 34 bestimmt, die die Trennwand 9,10 bis zur Anlage der Gummimembran 7,8 an den Deckel 2 des Unterdruckgehäuses gegen die Kraftabgaberichtung 13 schiebt. Bei Ruhestellung des Pedals wird durch Anlage der Dichtkante 29 des Ventilkolbens 19 auf dem Ventilteller 25 die Luftzufuhr zur Arbeitskammer 5 abgesperrt. Somit herrscht in der Arbeitskammer 5 ein Unterdruck (dargestellt durch schwach punktierten Raum in Fig.1), da Arbeitskammer 5, wie in Fig.1 und Fig.2 gezeigt, über die Öffnungen 31, den Raum 30 und um die Stufe 32, den Kanal 33 mit der Unterdruckkammer 6 (dargestellt durch schwach punktierten Raum in Fig.1) verbunden ist und da die Unterdruckkammer 6 über einen nicht dargestellten Anschluss mit einer kontinuierlich arbeitenden, nicht dargestellten Unterdruckquelle oder Vakuumquelle verbunden ist(dargestellt durch Pfeile 35).

Wie Fig.1 zeigt, wird mit Hilfe einer Sensoreinheit 36 der Druck in der Arbeitskammer 5 und der Unterdruckkammer 6 gemessen. Ein erstes Sensorelement (hier nicht dargestellt) der Sensoreinheit 36 steht dazu über eine erste Öffnung 37 mit der Unterdruckkammer 6 in Verbindung und ein zweites Sensorelement (hier nicht dargestellt) steht mit der Arbeitskammer über eine zweite Öffnung 38 in einem Verbindungsröhrchen 39, welches die bewegliche Wand 9 durchdringt, in Verbindung. Anstatt des Verbindungsröhrchens 39 kann auch ein Schlauch oder eine ähnliche flexible Verbindungsleitung angeordnet sein. Die Sensoreinheit 36 kann von der Innenseite des Unterdruckbremskraftverstärkers oder von dessen Außenseite montiert werden. Im ersten Fall ist die Sensoreinheit 36 dem Bremskraftverstärkers fest zugehörend. Im Ersatzfall muss dann der gesamte Unterdruckbremskraftverstärkers getauscht werden. Daher ist die hier gezeigte Ausführungsform mit einer an der Außenseite angeordneten Sensoreinheit 36 bevorzugt. Vorzugsweise wird diese, wie in Fig.1 gezeigt ist, an einem ausgangsseitigen Bereich des Unterdruckbremskraftverstärkers angeordnet. Das bedeutet an der Seite, in welche Richtung das Kraftabgabeglied 14 zur Bremsdruckerzeugung wirkt. In diesem speziellen Ausführungsbeispiel ist an dieser Seite auch ein Wegsensor 40 angeordnet. Dieser sensiert mit dem Stift 41 die Stellung bzw. den Weg der Trennwand 9. In der Regel wird der Wegsensor 40 aber nicht benötigt. Bevorzugte Ausführungsformen sind daher Unterdruckbremskraftverstärker ohne den hier gezeigten Wegsensor 40.

In der dargestellten Stellung wird durch die Sensoreinheit 36 kein Unterschied zwischen dem durch das erste und zweite Sensorelement gemessenen Druck ermittelt, da die Verbindung zur Außenluft unterbrochen ist und der Kanal zur Unterdruckkammer geschlossen ist. Diese Stellung entspricht einer Ruhestellung bzw. Lösestellung des Unterdruckbremskraftverstärkers.

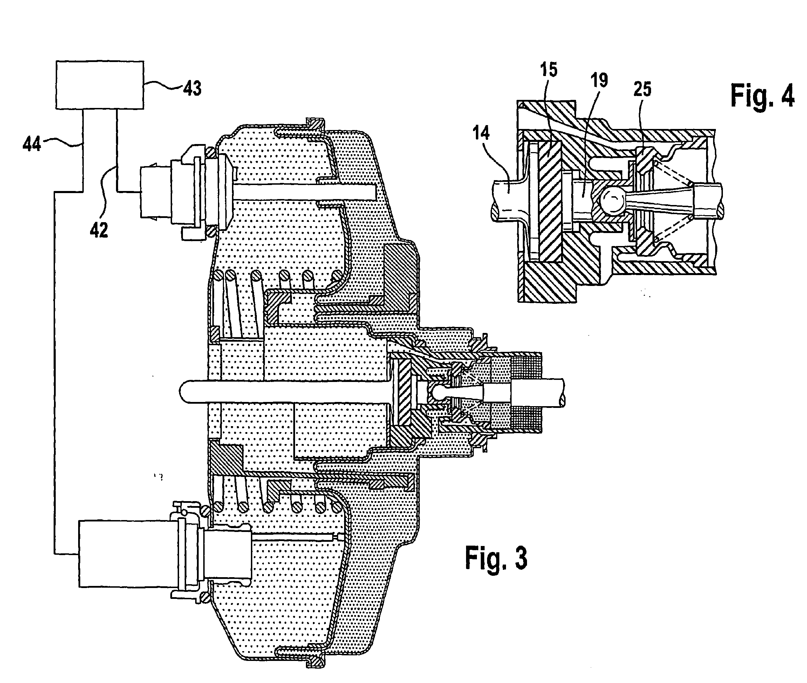

Wird das Pedal betätigt und somit die Kolbenstange 20 und der Ventilkolben 19 verschoben, so wird das Tellerventil 22 bis zur Anlage des Ventiltellers 25 an der Stufe 32 der Bewegung folgen. Der Kanal 33 ist dann vom übrigen Raum 30 abgetrennt, die Unterdruckkammer 6 und die Arbeitskammer 5 stehen nicht mehr miteinander in Verbindung. Im weiteren Verlauf der Bewegung wird auch die Verbindung zur Außenluft durch das Tellerventil 25 geöffnet und der Unterdruck beginnt sich hinter der Membran 7,8 abzubauen. Durch einen sich aufbauenden hydraulischen Druck in einem Hauptbremszylinder, der sich an den Unterdruckbremskraftverstärker in Kraftabgaberichtung 13 anschließt, kommen die Kolben im Hauptbremszylinder sowie das Kraftabgabeglied 13 und, durch die Reaktionsscheibe 15 übertragen, auch der Ventilkolben 19 zum Stillstand. Gleichzeitig schließt sich das Tellerventil 25 und unterbindet dadurch die weitere Außenluftzufuhr. Die jetzt erreichte Bereitschaftsstellung den ist in der Fig.3 und Fig.4 dargestellt.

In der Bereitschaftsstellung oder Teilbremsstellung bewirkt jede geringfügige Änderung der Pedalkraft eine Vergrößerung oder Verkleinerung der Druckdifferenz auf beiden Seiten der Trennwand 9,10 und über den Hauptbremszylinder eine Erhöhung oder Reduzierung des hydraulischen Drucks im Bremssystem und damit eine Abbremsung. Der Druckunterschied zwischen Arbeitskammer 5 (dargestellt durch stärker punktierten Raum in Fig.3) zur Unterdruckkammer 6 (dargestellt durch schwach punktierten Raum in Fig.3) wird durch die Sensoreinheit 36 mittels der zugehörigen Sensorelemente ermittelt. Die Sensoreinheit 36 erzeugt ein für die Druckdifferenz charakteristisches Signal. Dieses wird über eine Leitung 42 einer Steuereinheit 43 zugeführt. Auch das Signal des Wegsensors 40 wird über eine Leitung 44 die Steuereinheit 43 zugeführt und ausgewertet. Nach Maßgabe der Auswertung ist ein Ansteuersignal für eine aktive hydraulische Bremskraftunterstützungseinheit im Sinne eines Aufbaus eines zusätzlichen Bremsdrucks erzeugbar, falls der allein durch den Unterdruckbremskraftverstärker im Hauptbremszylinder erzeugte Bremsdruck zu gering ist.

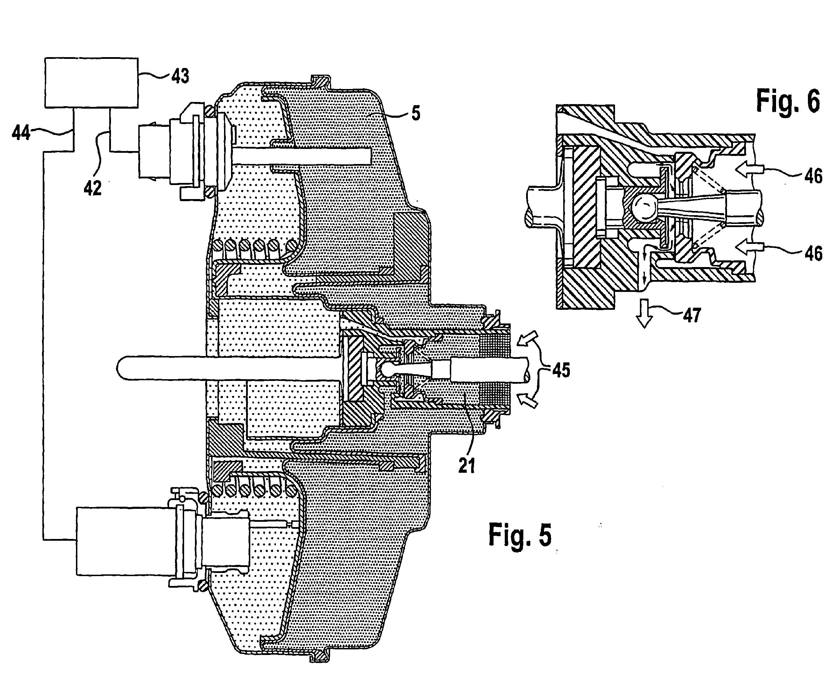

Wird das Pedal weiter niedergedrückt, so wird ein Teil der Kraft über die Reaktionsscheibe 15 direkt auf das Kraftabgabeglied 14 geleitet, gleichzeitig wird sich aber die Dichtkante 29 des Ventilkolbens 19 vom Ventilteller 25 abheben und den Raum 30 mit dem Luftraum 21 und somit mit der Atmosphäre verbinden. Dies ist in der Fig.5 und Fig.6 gezeigt. Nun strömt Luft aus der Atmosphäre (Pfeile 45 in Fig.5) in axialer Richtung durch das Tellerventil 25 (Pfeile 46 in Fig.6) und dann in den Raum 30 und von hier aus durch die Öffnung 331 in die Arbeitskammer 5. Die entstehende Druckdifferenz von Arbeitskammer 5 zur Unterdruckkammer 6 versucht, die Trennwand 9,10 in Kraftabgaberichtung 13 zu verschieben. Der Druck in Raum 21 (Atmosphärendruck) entspricht nun dem Druck in der Arbeitskammer 5 (dargestellt durch stark punktierte Räume in Fig. 5), während der Druck der Unterdruckkammer einem aufgrund der angeschlossenen Unterdruckquelle erzeugten Unterdruck entspricht (dargestellt durch den schwach punktierten Raum in Fig.5). Alle auftretende Kräfte werden von der Trennwand 10 auf das Kraftabgabeglied 14 übertragen. Die Steuernabe 4 bleibt frei von diesen Betätigungskräften.

Der durch die Sensoreinheit 36 ermittelte Druckunterschied zwischen Arbeitskammer 5 (stark punktierter Raum) zur Unterdruckkammer 6 (schwach punktierter Raum) ist maximal. Dies entspricht einer Vollbremsstellung des Unterdruckbremskraftverstärkers. Die maximal mögliche Unterstützungskraft des Unterdruckbremskraftverstärkers ist gegeben; der Aussteuerpunkt ist erreicht. Eine weitere Erhöhung der Kraft auf den Hauptbremszylinderkolben, der sich an das Kraftabgabeglied 13 anschließt, ist nur durch eine noch größere Pedalkraft durch den Fahrer möglich. Die Sensoreinheit 16 erzeugt ein für diese Druckdifferenz charakteristisches Signal, welches das Erreichen des Aussteuerpunkts anzeigt. Da die maximal mögliche Unterstützungskraft des Unterdruckbremskraftverstärkers bei einer weiteren Anforderung des Fahrers an einer Bremsdruckerhöhung nicht ausreicht, erzeugt die Steuereinheit 43 dann ein Ansteuersignal für eine aktive hydraulische Bremskraftunterstützung im Sinne eines Aufbaus eines zusätzlichen Bremsdrucks.

Für bestimmte Systeme kann der Unterdruckbremskraftverstärker auch ein elektronisch geregeltes Ventil aufweisen, mit dem eine auf die Trennwand 9,10 einwirkende Druckdifferenz gesteuert wird (aktiver Booster, hier nicht dargestellt).

In der Fig. 7 ist die Sensoreinheit 36 in einem Schnittbild dargestellt.

Bei der Sensoreinheit 36 nach Fig.7 wird über ein erstes Sensorelement 50 der Druck der Unterdruckkammer 6 und über ein zweites Sensorelement 51 der Druck in der Arbeitskammer 5 sensiert. Ein Grundkörper bzw. ein gemeinsames Gehäuse 52 der Sensoreinheit 36 ist hier mit dem Verbindungsröhrchen 39, welches die Trennwand (siehe Fig.1,3,5) durchdringt, über die Öffnung 38, mit der Arbeitskammer 5 verbunden. Anstatt eines Verbindungsröhrchens flexible Verbindungsleitung, z.B. Schlauch, vorgesehen werden. Die Sensoreinheit wird z.B. an dem hauptbremszylinderseitigen Topf 1 angebracht, dessen Inneres über eine elastische Dichtung 53 vakuumdicht abgedichtet wird, indem die Topfwandung 54 zwischen einer Kante 55 des Gehäuses 52 und der Dichtung 53 eingespannt wird. Die Montage kann vorteilhaft durch einen Schraubring 56 erfolgen, der die Dichtung 53 gegen die Wandung 54 des Topfes 1 und gegen die Kante 55 presst. Die einzelnen Druckelemente 50,51 können je nach Bedarf die Druckdifferenz oder den Absolutdruck sensierten. Die elektrische Verbindung zu der elektronischen Regeleinheit 43 der Fahrzeugbremsanlage oder einem anderen Steuergerät kann mittels nur einer Steckverbindung 57 hergestellt werden. Die Steckverbindung 57 weist mindestens 3 Pins 58,59,60, vorzugsweise aber 4 Pins, auf. Bei der gezeigten Sensoreinheit wird als Bezugsdruck der Atmosphärendruck gemessen, indem über eine Öffnung 61 eine Verbindung zur umgebenden Atmosphäre hergestellt ist.

Bevorzugt ist aber die Ausführung mit zwei Sensorelementen 50,51 gemäß Fig.7 in einem Gehäuse. Denn dieser "Doppel-Drucksensor" kann während der gesamten Prozesskette vom Hersteller der Sensoreinheit über den Hersteller des Unterdruckbremskraftverstärkers bis zum Fahrzeughersteller wie ein Sensor behandelt werden, obwohl die Funktionalität von zwei Drucksensoren gegeben ist, die an stark unterschiedlichen Stellen im Bremskraftverstärker den Druck sensierten. Dadurch ergeben sich Kostenvorteile, da nur ein Bauteil ausreicht, sowie Montagevorteile, da mit nur einer Steckverbindung ein Anschluss der Sensoreinheit möglich ist. Auch für das Packaging ist die Bauform und Anordnung der Sensoreinheit 36 nach Fig.7 vorteilhaft. Auf der Seite des Hauptbremszylinders steht in den heutigen Fahrzeugen in der Regel ein größerer Bauraum zur Verfügung als an der Pedalseite eines Unterdruckbremskraftverstärkers, so dass die hauptbremszylinderseitige Anordnung bevorzugt ist. Aber auch im Motorraum heutiger Fahrzeuge steht immer weniger Bauraum zur Verfügung. Daher ist besonders bevorzugt ein gemeinsames Gehäuse 52 für das erste Sensorelement 50 und das zweite Sensorelement 51 vorgesehen, das Einheiten zur elektronischen Auswertung oder Verarbeitung der Sensorsignale, z.B. elektronische Schaltungen, selbst nicht aufweist, so dass eine möglichst kompakte Bauform realisiert werden kann. Eine weitere Verringerung des Platzbedarfs im Motorraum wird durch die zumindest teilweise Integration des Gehäuses 52 in das Unterdruckgehäuse, insbesondere die Unterdruckkammer, erzielt.

## Patentansprüche

1. .Unterdruckbremskraftverstärker einer Fahrzeugbremsanlage, mit einem Unterdruckgehäuse (1, 2), das durch mindestens eine bewegliche Trennwand (9) in mindestens eine Unterdruckkammer (6) und mindestens eine Arbeitskammer (5) aufgeteilt ist und mit einer Sensoreinheit (36) zur Sensierung von Drücken in dem Unterdruckbremskraftverstärker, wobei die Sensoreinheit (36) dafür vorgesehen ist, den Druck in der Unterdruckkammer (6) und den Druck in der Arbeitskammer (5) oder den Druckunterschied zwischen der Arbeitskammer (5) und der Unterdruckkammer (6) zu sensieren, und wobei dem Unterdruckbremskraftverstärker eine elektronische Steuereinheit (43) zugeordnet ist, die eine Auswerteeinheit aufweist, zwecks Auswertung der sensierten Drücke in der Unterdruckkammer (6) und der Arbeitskammer (5) oder des Druckunterschieds zwischen der Arbeitskammer (5) und der Unterdruckkammer (6), und wobei die elektronische Steuereinheit (43) eine Ansteuerungseinheit aufweist, zwecks Ansteuerung einer aktiven hydraulischen Bremskraftunterstützungseinheit auf Grundlage der Auswertung durch die Auswerteeinheit, und wobei die Sensoreinheit (36) über ein erstes Sensorelement (50) den Druck der Unterdruckkammer (6) und über ein zweites Sensorelement (51) den Druck der Arbeitskammer (5) sensiert, und wobei die beiden Sensorelemente (50, 51) in einem gemeinsamen Gehäuse (52) angeordnet sind, das zumindest teilweise durch eine einzige Öffnung im Unterdruckgehäuse (1, 2) in die Unterdruckkammer (6) ragt, **dadurch gekennzeichnet, dass** zwei separate Messbohrungen im Gehäuse (52) der Sensoreinheit (36) ausgebildet sind, wobei die erste Messbohrung das erste Sensorelement (50) direkt mit der Unterdruckkammer (6) verbindet, während die zweite Messbohrung in eine rohr- oder schlauchförmige Verbindungsleitung (38, 39), welche die bewegliche Trennwand (9) durchdringt, mündet und das zweite Sensorelement (51) mit der Arbeitskammer (5) verbindet.

2. . Unterdruckbremskraftverstärker nach Anspruch 1, **dadurch gekennzeichnet, dass** eine elastische Dichtung (53) vorgesehen ist, die derart angeordnet ist, dass eine Wandung (54) des Unterdruckgehäuses (1, 2) zwischen einer Kante (55) des Gehäuses (52) und der Dichtung (53) eingespannt ist.

3. . Unterdruckbremskraftverstärker nach Anspruch 1 oder 2, **dadurch gekennzeichnet, dass** ein Schraubring (56) vorgesehen ist, der die Dichtung (53) gegen die Wandung (54) des Unterdruckgehäuses (1, 2) und gegen die Kante (55) presst.

4. . Unterdruckbremskraftverstärker nach einem der vorhergehenden Ansprüche, **dadurch gekennzeichnet, dass** bei Bremssystemen mit einem Hauptbremszylinder, insbesondere Tandem-Hauptbremszylinder, die Sensoreinheit (36) an der dem Hauptbremszylinder zugewandten Wandung (54) des Unterdruckgehäuses (1, 2) angeordnet ist.

5. . Unterdruckbremskraftverstärker nach einem der vorhergehenden Ansprüche, **dadurch gekennzeichnet, dass** die Sensoreinheit (36) zur elektrischen Verbindung mit einer Steuereinheit, zwecks Übertragung von Signalen der Sensorelemente (50, 51), eine vierpolige Steckverbindung (57) aufweist.

## Claims

1. Vacuum brake booster of a vehicle braking system, comprising a vacuum housing (1, 2) that is subdivided by at least one movable partition (9) into at least one vacuum chamber (6) and at least one working chamber (5), and a sensor unit (36) for sensing pressures in the vacuum brake booster, wherein the sensor unit (36) is provided to sense the pressure in the vacuum chamber (6) and the pressure in the working chamber (5) or the difference in pressure between the working chamber (5) and the vacuum chamber (6), and wherein associated with the vacuum brake booster is an electronic control unit (43) that includes an evaluation unit for the purpose of evaluating the sensed pressures in the vacuum chamber (6) and the working chamber (5) or the difference in pressure between the working chamber (5) and the vacuum chamber (6), and wherein the electronic control unit (43) includes an actuation unit for the purpose of actuating an active hydraulic brake force boosting unit on the basis of the evaluation by the evaluation unit, and wherein the sensor unit (36) uses a first sensor element (50) for sensing the pressure in the vacuum chamber (6) and a second sensor element (51) for sensing the pressure in the working chamber (5), both sensor elements (50, 51) being accommodated in one common housing (52), which projects at least in part through one single opening in the vacuum housing (1, 2) into the vacuum chamber (6),
c h a r a c t e r i z e d in that two separate measuring bores are designed in the housing (52) of the sensor unit (36), and the first measuring bore connects the first sensor element (50) directly to the vacuum chamber (6), while the second measuring bore opens into a tubular or hose-type connecting line (38, 39) that penetrates the movable partition (9) and connects the second sensor element (51) to the working chamber (5).

2. Vacuum brake booster as claimed in claim 1,
**characterized in that** an elastic seal (53) is provided, being arranged in such a fashion that a wall (54) of the vacuum housing (1, 2) is compressed between an edge (55) of the housing (52) and the seal (53).

3. Vacuum brake booster as claimed in claim 1 or 2,
**characterized in that** a threaded ring (56) is provided that presses the seal (53) against the wall (54) of the vacuum housing (1, 2) and against the edge (55).

4. Vacuum brake booster as claimed in any one of the preceding claims,
**characterized in that** in brake systems comprising a master brake cylinder, in particular a tandem master brake cylinder, the sensor unit (36) is arranged at the wall (54) of the vacuum housing (1, 2) that faces the master brake cylinder.

5. Vacuum brake booster as claimed in any one of the preceding claims,
**characterized in that** the sensor unit (36) includes a four-pole plug coupling (57) for the electrical connection to a control unit for the purpose of transmitting signals to the sensor elements (50, 51).

## Revendications

1. Servofrein à dépression d'un système de freinage de véhicule comportant un boîtier à dépression (1, 2) qui est divisé par au moins une cloison (9) mobile en au moins une chambre à dépression (6) et au moins une chambre de travail (5), et comportant une unité de détection (36) pour détecter les pressions dans le servofrein à dépression, l'unité de détection (36) étant prévue pour détecter la pression dans la chambre à dépression (6) et la pression dans la chambre de travail (5) ou la différence de pression entre la chambre de travail (5) et la chambre à dépression (6), et au servofrein à dépression étant associée une unité de commande électronique (43) qui comporte une unité d'évaluation pour évaluer les pressions détectées dans la chambre à dépression (6) et la chambre de travail (5) ou la différence de pression entre la chambre de travail (5) et la chambre à dépression (6), et l'unité de commande électronique (43) comportant une unité de commande pour commander une unité hydraulique active de soutien de la force de freinage sur la base de l'évaluation par l'unité d'évaluation, et l'unité de détection (36) détectant, par l'intermédiaire d'un premier élément de détection (50), la pression de la chambre à dépression (6) et, par l'intermédiaire d'un second élément de détection (51), la pression de la chambre de travail (5), et les deux éléments de détection (50, 51) étant disposés dans un boîtier (52) commun qui pénètre au moins partiellement dans la chambre à dépression (6), à travers une seule ouverture du boîtier à dépression (1, 2), **caractérisé en ce que** deux trous de mesure séparés sont pratiqués dans le boîtier (52) de l'unité de détection (36), le premier trou de mesure reliant directement le premier élément de détection (50) à la chambre à dépression (6), tandis que le second trou de mesure débouche dans une conduite de liaison (38, 39) en forme de tube ou de tuyau, qui traverse la cloison mobile (9), et relie le second élément de détection (51) à la chambre de travail (5).

2. Servofrein à dépression selon la revendication 1, **caractérisé en ce qu'**il est prévu une garniture d'étanchéité (53) élastique qui est disposée de manière qu'une paroi (54) du boîtier à dépression (1, 2) soit serrée entre un bord (55) du boîtier (52) et la garniture d'étanchéité (53).

3. Servofrein à dépression selon la revendication 1 ou 2, **caractérisé en ce qu'**il est prévu une bague filetée (56) qui presse la garniture d'étanchéité (53) contre la paroi (54) du boîtier à dépression (1, 2) et contre le bord (55).

4. Servofrein à dépression selon l'une des revendications précédentes, **caractérisé en ce que** dans le cas de systèmes de freinage avec un cylindre de frein principal, en particulier un cylindre de frein principal tandem, l'unité de détection (36) est disposée sur la paroi (54) tournée vers le cylindre de frein principal du boîtier à dépression (1, 2).

5. Servofrein à dépression selon l'une des revendications précédentes, **caractérisé en ce que** l'unité de détection (36) comporte, pour la liaison électrique avec une unité de commande, un connecteur à fiches (57) quadripolaire pour la transmission des signaux des éléments de détection (50, 51).
